# EUROPÄISCHE PATENTSCHRIFT

(11) **EP 2 516 902 B1**
(45) Veröffentlichungstag und Bekanntmachung des Hinweises auf die Patenterteilung: **01.05.2013**
(21) Anmeldenummer: 10787011.5
(22) Anmeldetag: 19.11.2010
(51) Int. Cl.: F16K 11/06

(54) **SANITÄRE AUSLAUFEINHEIT**
SANITARY OUTLET UNIT
ENSEMBLE SANITAIRE DE DISTRIBUTION

(30) Priorität: 23.12.2009 DE 102009060501
(43) Veröffentlichungstag der Anmeldung: 31.10.2012
(73) Patentinhaber: Neoperl GmbH, 79379 Müllheim (DE)
(72) Erfinder: SCHÜRLE, Holger, 79379 Müllheim (DE); BAMMERLIN, Werner, 79379 Müllheim (DE); STEINBRUNNER, Michael, 79395 Neuenburg (DE)
(74) Vertreter: Maucher, Wolfgang
(86) Internationale Anmeldenummer: PCT/EP2010/007039
(87) Internationale Veröffentlichungsnummer: WO 2011/076320

(56) Entgegenhaltungen:
- DE-A1-102007 058 835
- US-A1- 2007 199 599
- US-A1- 2007 252 022

## Beschreibung

Die Erfindung betrifft eine sanitäre Auslaufeinheit mit einer wenigstens einen Wasserauslauf aufweisenden Auslaufarmatur und mit zumindest einer zur Belüftung des Wasserstrahls vorgesehenen Belüftungseinrichtung, die in Strömungsrichtung beabstandet vor dem wenigstens einen Wasserauslauf angeordnet ist, und mit zumindest einem Ventilteil, welches den Zustrom aus wenigstens einer Wasserleitung zu dem Wasserauslauf reguliert.

Es sind bereits Auslaufeinheiten bekannt, bei welchen im Bereich des Wasserauslaufs ein Strahlregler angeordnet ist, der den aus dem Wasserauslauf austretenden Wasserstrahl belüften und zu einem homogenen, perlend-weichen Wasserstrahl formen soll. Die vorbekannten Strahlregler weisen in ihrem Strahlregler-Gehäuse dazu einen, meist als Lochplatte ausgestalteten Strahlzerleger auf, dem eine Homogenisiereinrichtung und gegebenenfalls ein Strömungsgleichrichter nachgeschaltet ist. Das Strahlreglergehäuse der vorbekannten Strahlregler weist im Bereich der Homogenisiereinrichtung Belüftungsöffnungen auf, die als. Belüftungseinrichtung zum Belüften des mittels des Strahlzerlegers vorübergehend in Einzelstrahlen aufgeteilten Wasserstrahls dienen (vgl. DE-A-30 00 799). Die vorbekannten Strahlregler werden mit ihrem Strahlreglergehäuse in ein Auslaufmundstück eingesetzt, dass am Armaturenauslauf mittels einer Schraubverbindung lösbar befestigt werden kann.

Das zur Montage der vorbekannten Strahlregler benötigte Auslaufmundstück legt die Form sanitärer Auslaufarmaturen im Bereich des Armaturenauslaufs fest. Man ist jedoch zunehmend bestrebt, unkonventionelle und ästhetisch anspruchsvolle Auslaufarmaturen zu gestalten.

Aus der DE 1 220 345 A ist ein ausziehbarer Schwenkarm bekannt. Solche Ausziehschwenkarme weisen meist eine Luftbeimischungseinrichtung auf. Bei diesen ausziehbaren Schwenkarmen kann am Auslaufende kein herkömmlicher Strahlregler angeschraubt werden, da es durch den Rückstau zu selbsttätigem Ausziehen des ausziehbaren Schwenkarms und zu Undichtigkeiten führen könnte. Der Strahlregler wird daher bei solchen teleskopartigen Schwenkarmen am montageseitigen Armabschnitt befestigt, wobei die erforderliche Luftansaugung dann dort stattfindet. Solche ausziehbaren Schwenkarme werden jedoch vielfach so montiert, dass das Schwenkrohr über dem Wasserhahn liegt, um eine zu geringe Höhenlage der Zapfstelle über dem Ablaufbecken auszugleichen. Bei dem aus DE 1 220 345 A vorbekannten Ausziehschwenkarm wird also eine Undichtigkeit durch die spezielle Anordnung der Luftzutrittsöffnungen am Auslaufende oder nahe am Auslaufende entgegengewirkt, wobei dieser aus DE 1 220 345 A vorbekannte Schwenkarm die Anordnung des Wasserauslaufs stets unterhalb der Luftzutrittsöffnung voraussetzt, um beim Schließen des Wasserhahns ein Auslaufen des im Wasserauslaufs verbliebenen Wassers durch die Luftzutrittsöffnungen zu verhindern.

Außerdem kennt man aus der DE 10 2006 021 801 A1 auch eine Auslaufeinheit, bei der im Verlauf der Auslaufarmatur eine Belüftungseinrichtung derart angeordnet ist, dass zur Fremdbelüftung eine Öffnung in der Armatur vorgesehen ist, die eventuell hinsichtlich der optischen Gestaltung der Armatur unerwünscht ist. Außerdem kann es bei den betreffenden Armaturen an Membranen und Ventilen zu Dichtigkeitsproblemen kommen, insbesondere wenn beispielsweise ein Ventil gegen den hydrostatischen Druck des Wassers aus dem Rücklauf nicht vollständig schließt.

Aus der US 2007/0252022 A1 ist bereits ein Brausekopf vorbekannt, der über eine flexible Schlauchleitung mit einer Küchen-Auszugsarmatur verbunden ist. Der vorbekannte Brausekopf weist ein als Zwei-Wege-Ventil ausgebildetes Ventilteil 20 auf, an dem der Anwender mit Hilfe eines Stellgliedes 120 entweder einen belüfteten Wasserstrahl oder aber einen ringförmigen Brausestrahl wählen und einstellen kann. Während der belüftete Strahl durch einen zentralen auslaufseitigen und als Belüftungseinrichtung dienenden Strahlbelüfter 70 erzeugt wird, wird der im Ventilteil über einen anderen Flüssigkeitsweg geführte Brausestrahl durch einen auslaufseitigen und den Strahlregler 70 umgrenzenden Lochkreis 40 mit Durchflusslöchern 42 gebildet. Dabei ist das als Ventilteil 20 dienende Zwei-Wege-Ventil in Strömungsrichtung vor dem Strahlbelüfter 70 einerseits und dem Lochkreis 40 andererseits angeordnet, wobei Strahlbelüfter 70 und Lochkreis 40 den einen und den anderen Wasserauslauf der vorbekannten Auslaufeinheit bilden. Der Strahlbelüfter 70 und der ihn umgebende Lochkreis 40 geben die äußere Kontur der vorbekannten Auslaufeinheit im Bereich ihres Wasserauslaufs vor und lassen sich sinnvoll nur als Brausekopf realisieren.

Es besteht daher die Aufgabe, eine sanitäre Auslaufeinheit zur Verfügung zu stellen, die eine zuverlässige Belüftung des Wasserstrahls bei hoher Dichtigkeit gegen rücklaufendes Wasser gewährleistet und sich ohne größere konstruktive Änderungen in bestehende Armaturen integrieren lässt.

Die erfindungsgemäße Lösung dieser Aufgabe besteht darin, dass die Belüftungseinrichtung in dem zumindest einen Ventilteil aufgenommen ist, dass die Belüftungseinrichtung einen Belüftungskanal aufweist, der derart in dem zumindest einen Ventilteil aufgenommen ist, dass der Belüftungskanal zwischen einer mit der Umgebungsluft kontaktierten Einlassöffnung und einer zuströmseitig vor einem Ablauf des Ventilteils mündenden Auslassöffnung verläuft, dass die Belüftungseinrichtung mit wenigstens einem Stellglied versehen ist, dessen Bewegung zwischen wenigstens einer Schließstellung und mindestens einer Offenstellung die Zufuhr von Umgebungsluft zu dem Wasserstrahl im Inneren des Ventilteils ändert, und dass das Stellglied in seiner Schließstellung die Einlassöffnung der Belüftungseinrichtung übergreift und abdichtet.

Bei der erfindungsgemäßen Auslaufeinheit ist also die Belüftungsfunktion der Belüftungseinrichtung bereits in dem Ventilteil integriert. Die Belüftungseinrichtung weist dazu einen Belüftungskanal auf, der derart in dem zumindest einen Ventilteil aufgenommen ist, dass der Belüftungskanal zwischen einer mit der Umgebungsluft kontaktierten Einlassöffnung und einer zuströmseitig vor einem Ablauf des Ventilteils mündenden Auslassöffnung verläuft. Da die Luftzufuhr zum durchströmenden Wasser im Ventilteil und somit an einem recht weit stromaufwärts befindlichen Punkt stattfindet, unterliegt die Gestaltung des Wasserauslaufs keinen Einschränkungen. Die Belüftungseinrichtung ist mit wenigstens einem Stellglied versehen, dessen Bewegung zwischen wenigstens einer Schließ- und mindestens einer Offenstellung die Zufuhr von Umgebungsluft zu dem Wasserstrahl im Inneren des Ventilteils ändert, wobei das Stellglied in seiner Schließstellung die Einlassöffnung der Belüftungseinrichtung übergreift und abdichtet. Da mittels dem Stellglied die Zufuhr von Umgebungsluft zu dem Wasserstrahl im Inneren des Ventilteils geändert werden kann und da das Stellglied in seiner Schließstellung die Einlassöffnung der Belüftungseinrichtung im Inneren des Ventilteils übergreift und abdichtet, können die im Ventilteil ohnehin vorhandenen Dichtmittel zur Abdichtung der Belüftungseinrichtung gegen rücklaufendes Wasser mitgenutzt werden.

Da die Belüftungseinrichtung im wesentlichen durch einen, zwischen einer mit der Umgebungsluft kontaktierten Einlassöffnung und einer zuströmseitig vor dem Ablauf des Ventilteils mündenden Auslassöffnung verlaufenden Belüftungskanal gebildet ist, durchgreift der Belüftungskanal zwischen seinen beiden Öffnungen einen Bereich des Ventilteils, so dass seine Einlassöffnung zumindest in der Offenstellung so angeordnet ist, dass der Armaturenkörper das Ansaugen von Umgebungsluft nicht verhindert.

Bevorzugt ist bei einer Ausführung der erfindungsgemäßen Auslaufeinheit das Ventilteil als in der Auslaufarmatur angeordnete Kartusche ausgebildet, die den Zustrom von Wasser aus einer oder mehreren Wasserleitungen in Richtung des Wasserauslaufs reguliert und bei Schließstellung der Kartusche jedenfalls gegenüber der Auslauföffnung der betreffenden Leitung bzw. Leitungen eine dichtende Funktion wahrnimmt. Die Kartusche kann sowohl eine solche einer Mischbatterie, als auch eines einfachen Auslaufoberteils sein, die lediglich eine Leitung als Zulauf aufweist und bei welcher eine eventuelle Mischung von Wasserströmen in einem von den verwendeten Kartuschen gesehen stromabwärts befindlichen Mischraum stattfindet.

Ein gut regulierbarer Zufluss aus einer oder mehreren Zuleitungen der Auslaufarmatur wird bei einer Weiterbildung der Auslaufeinheit erreicht, bei der das Ventilteil wenigstens zwei gegeneinander bewegliche Ventilelemente, insbesondere eine ortsfestes und ein gegenüber diesem ortsfesten bewegliches Ventilelement aufweist, und wenigstens eines der Ventilelemente zwischen einer Schließ- und einer Offenstellung bewegbar ist.

Die Ventilelemente können bei einer bevorzugten Ausführung des Auslaufteils beispielsweise als scheibenartige, mit kreisförmigen oder ovalen Flächen aufeinander zu liegen kommende Formteile als Dichtelemente ausgebildet sein, die bereits durch die Wahl Ihres Materials, das etwa in einer Keramik, einem Kunststoff oder einer Mischform dieser Materialien bestehen kann und der betreffenden Anordnung eine dichtende Funktion zur Verfügung stellen. Außerdem lässt sich durch die Bewegung der Ventilelemente gegeneinander zusammen mit einer angepassten Geometrie der Zutrittsöffnungen aus mehreren Wasserleitungen eine gewünschte Mengenmischung erreichen.

Bei einer bevorzugten Ausführung der Auslaufeinheit reguliert die Position der Ventilelemente zueinander den Zutritt von Wasser aus mehr als einer Wasserleitung zu einem gemeinsamen Mischraum, welche Leitungen insbesondere Wasser unterschiedlicher Temperatur transportieren. Durch die Bewegung der Ventilelemente gegeneinander zusammen mit einer angepassten Geometrie der Zutrittsöffnungen aus mehreren Wasserleitungen lässt sich hierbei eine gewünschte Mengenmischung erreichen.

Besonders einfach herzustellen und wirkungsvoll zu steuern ist die Belüftung einer Ausführung der erfindungsgemäßen Auslaufeinheit, die die Einlassöffnung der Belüftungseinrichtung durch ein mit dem beweglichen Ventilelement zusammenwirkendes Dichtelement verschließ- und abdichtbar vorsieht, so dass etwa ein Überführen des Stellglieds aus einer Schließ- in die Offenstellung gleichzeitig das Dichtelement in eine Offenstellung bezüglich der Einlassöffnung bringt.

Bei einer besonders bevorzugten Ausführungsform der Auslaufeinheit bildet dann ein Abschnitt des beweglichen Ventilelements des Ventilteils das der Belüftungseinrichtung zugeordnete Stellglied, welches in seiner Schließstellung die Einlassöffnung der Belüftungseinrichtung übergreift und abdichtet, so dass die Belüftungsöffnung bei Öffnung des Zulaufs aus den Wasserleitungen durch das Stellglied automatisch freigegeben wird.

Eine sicher und einfach bedienbare Ausführungsform der Auslaufeinheit stellt eine Einhebel-Mischbatterie dar, bei der eine Handhabe der Auslaufeinheit über ein Stellorgan mit dem beweglichen Ventilelement verbunden ist und eine Betätigung der Handhabe eine im wesentlichen quer hierzu verlaufende Bewegung des Ventilelements auslöst, so dass die Ventilelemente eine zueinander parallele Bewegung ausführen können.

Um wahlweise einen belüfteten oder unbelüfteten Wasserstrahl aus der erfindungsgemäßen Auslaufeinheit zu erhalten ist es von Vorteil, wenn an der Belüftungseinrichtung wenigstens ein weiteres, von dem ersten Stellglied unabhängiges zweites Stellglied zur Änderung der Luftzufuhr vorgesehen ist. Im Falle einer Mischbatterie für die Mischung von Wasser unterschiedlicher Temperatur könnte diese Funktion beispielsweise zur Kenntlichmachung von Temperaturbereichen eingesetzt werden, wobei ein Temperaturbereich durch einen laminaren, ein anderer durch einen belüfteten Strahl gekennzeichnet sein kann.

Um bei der erfindungsgemäßen Auslaufeinheit eine besonders gute Durchmischung des Wasserstrahls mit Luft zu erreichen, kann eine Ausführung darin bestehen, an dem Ventilteil im Bereich der Auslassöffnung der Belüftungseinrichtung stromaufwärts eine Zumischeinrichtung vorzusehen.

Um mittels der Zumischeinrichtung den Strahl bereits zu zerlegen oder mittels des strömenden Wasserstrahls Luft anzusaugen und dann unter Durchmischung mitzureißen kann bei einer vorteilhafte Ausführungsform die Zumischeinrichtung als Strahlzerleger, Düse oder dergleichen Querschnittsverengung einen Bestandteil des Ventilteils bilden, die betreffende Einrichtung kann dann also bereits als Bestandteil einer Kartusche vorgesehen sein und erzeugt im Falle einer Querschnittsverengung durch die Beschleunigung des Wasserstrahl auf seiner Abströmseite einen Unterdruck.

Eine andere zweckmäßige Ausführungsform bildet in diesem Zusammenhang die Ausbildung der Zumischeinrichtung als in einen Bereich des Ventilteils austauschbar einbringbares, separates Einsetzteil, insbesondere in der Ausgestaltung als Strahlregler, der eine bedarfsorientierte Auswahl und Gestaltung des aus dem Auslauf austretenden Strahls gestattet.

Eine vorteilhafte Ausführungsform der Auslaufeinheit kann derart vorgesehen sein, dass die Belüftungseinrichtung mit einem Rückhaltemittel versehen ist, welches bei Offenstellung der Belüftungseinrichtung und Behinderung des Auslaufs des Wassers ein Zurückströmen des Wassers durch diese verhindert.

Bei einer zweckmäßigen Weiterbildung kann dann das Rückhaltemittel als Rückschlagventil vorgesehen sein.

Durch die Anordnung der Belüftungseinrichtung sowie wahlweise einer Zumischeinrichtung stromaufwärts von dem Wasserauslauf kann bei der Auslaufarmatur der Auslauf in weiten Grenzen frei gestaltet werden. Trotzdem kann eine sinnvolle Weiterbildung der Auslaufeinheit darin bestehen, an dem Wasserauslauf eine Aufnahme zur Anordnung eines Strahlreglers, Strahlrichtungsgeber oder dergleichen Strahlformer vorzusehen.

Die Erfindung wird nachstehend anhand von Ausführungsbeispielen in der Zeichnung näher erläutert. Es zeigen hierbei in teilweise schematisierter Form die
- Fig.1: eine geschnittene Seitenansicht eines ersten Ausführungsbeispiels einer Auslaufeinheit mit Auslaufarmatur mit Wasserauslauf und mit einer in einem Ventilteil aufgenommenen Belüftungseinrichtung sowie mit einem in Schließstellung befindlichen Stellglied
- Fig. 2: eine Schnittansicht von oben der Auslaufeinheit aus der Fig.1 entlang der Schnittlinie II-II
- Fig. 3: eine geschnittene Seitenansicht der Auslaufeinheit aus der Fig.1 mit in Offenstellung befindlichem Stellglied; ,
- Fig. 4: eine Schnittansicht von oben auf die Auslaufeinheit der Fig.3 entlang der Schnittlinie IV-IV;
- Fig. 5: eine perspektivische, längs geschnittene Ansicht des Ventilteils der Auslaufeinheit von schräg unten in der Schließstellung der Fig.1 und 3;
- Fig. 6: eine perspektivische, längs geschnittene Ansicht des Ventilteils der Auslaufeinheit von schräg unten in der Offenstellung der Fig.2 und 4;
- Fig. 7: eine Draufsicht von oben auf ein zweites Ausführungsbeispiel von in Schließstellung befindlichen Ventilelementen eines Ventilteils mit einem Strahlregler als abströmseitig angeordnete Zumischeinrichtung;
- Fig. 8: eine Draufsicht von oben auf die Ventilelemente des Ventilteils aus der Fig.7 in Offenstellung;
- Fig. 9: eine perspektivische, längs geschnittene Seitenansicht des Ventilteils der Fig.7;
- Fig.10: eine perspektivische, längs geschnittene Seitenansicht des Ventilteils der Fig.8

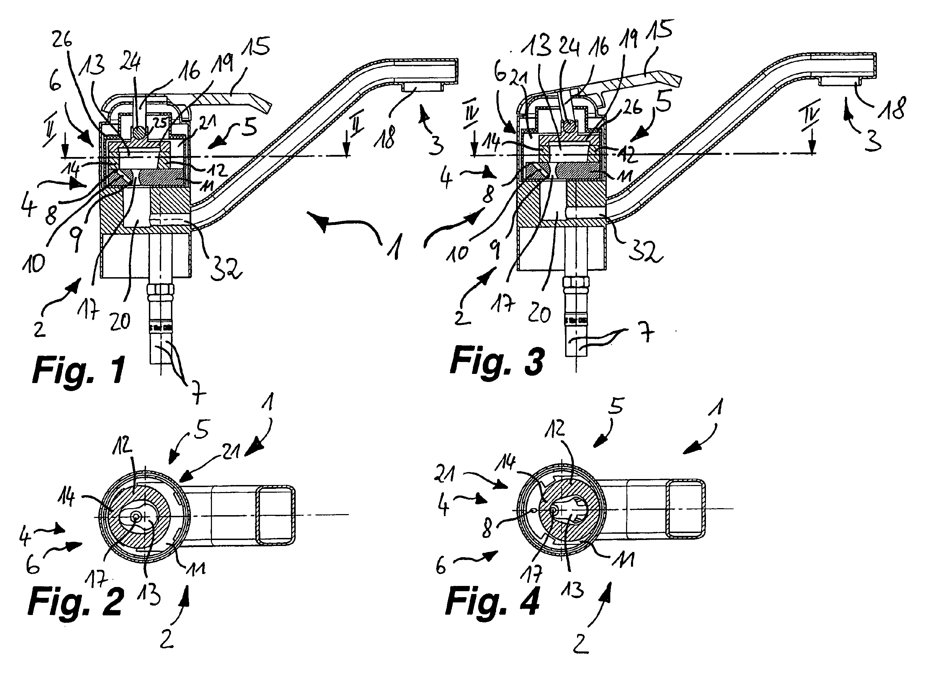

In den Fig.1 bis 4 ist zunächst eine im Ganzen mit 1 bezeichnete sanitäre Auslaufeinheit mit einer Auslaufarmatur 2 zu erkennen, die einen Wasserauslauf 3 aufweist, der aufgrund der Schnittführungen II-II und IV-IV in den Fig.2 und 4 nicht dargestellt ist. Wie in den Fig.1 und 3 erkennbar ist, wird ist über die Wasserleitungen 7 einem Ventilteil 5 ein Zustrom von Wasser zuführbar, dessen Abgabe aus dem Wasserauslauf durch das Ventilteil 5 regulierbar ist. Zur Belüftung des Wasserstrahls ist an der Auslaufeinheit 1 eine Belüftungseinrichtung 4 angeordnet, die sich in Strömungsrichtung beabstandet vor einem Wasseraustritt des Wasserauslaufs 3 befindet.

Die Belüftungseinrichtung 4 der Auslaufeinheit 1 ist, wie in den Fig.1 und 3 zu sehen ist, in dem Ventilteil 5 aufgenommen und mit einem Stellglied 6 versehen, dessen Bewegung zwischen einer Offen- und einer Schließstellung die Zufuhr von Umgebungsluft zu dem Wasserstrahl im Innern des Ventilteils 5 ändert. Hierbei weist die Belüftungseinrichtung 4 einen Belüftungskanal 10 auf, der sich zwischen einer mit der Umgebungsluft kontaktierten Einlassöffnung und einer zuströmseitig vor dem Ablauf 20 des Ventilteils 5 mündenden Auslassöffnung 9 erstreckt. Erkennbar ist das Ventilteil 5 in dem Ausführungsbeispiel als Kartusche einer Einhebel-Mischbatterie ausgebildet und weist ein ortsfestes und ein bewegliches Ventilelement 11,12 auf, die gegeneinander derart beweglich sind, dass das bewegliche Ventilelement 12 aus einer Schließstellung (Fig.1) in eine Offenstellung (Fig.3) bringbar ist und umgekehrt. Hierzu wird die Handhabe 15 durch eine im wesentlichen nach oben gerichtete Zugbewegung betätigt, wodurch das mit der Handhabe verbundene Stellorgan 16 eine Schieberplatte 19 und mit dieser verbunden das Ventilelement 12 im wesentlichen senkrecht zu der Zugbewegung bewegt bzw. antreibt. Durch die Überführung des Ventilelements 12 in die Offenstellung der Fig.3 und 4 gibt der Abschnitt 14 des Ventilelements 12 die Einlassöffnung 8 der Belüftungseinrichtung 4 frei, so dass über diese Öffnung 8 Luft zur Belüftung des Wasserstrahls dem Innern des Ventilteils 5 zugeführt werden kann. Bei der vorliegenden Auslaufeinheit 1 ist das Stellglied 6 durch das Ventilelement 12 mit seinem Abschnitt 14 sowie deren Verbindung mit der Schieberplatte 19 gebildet. Der Belüftungskanal 10 verläuft dabei von einer nach oben weisenden Oberfläche des scheibenartigen Ventilelements 11 schräg durch dieses in Richtung auf einen Ablauf 20 des Ventilteils 5 hin, vor welchem zuströmseitig seine Auslassöffnung 9 an der unten weisenden Oberfläche des Ventilelements 11 mündet. Vor dem Ablauf 20 ist in dem festen Ventilelement 11 stromaufwärts eine Zumischeinrichtung 17 in Form einer Querschnittsänderung zur Beschleunigung des Wasserstrahls und Erzeugung eines Unterdrucks angeordnet, wie den Fig.1 bis 6 entnehmbar ist. Zur optionalen Anordnung eines Strahlformers ist an dem freien Ende des Wasserauslaufs eine Aufnahme 18 angeordnet.

Eine Betrachtung der Fig.2 und der Fig.4 ergibt weiter, dass bei der erwähnten Öffnungsbewegung der Handhabe 15 die zugeordnete Bewegung des Ventilelements 12 zum einen das Zuströmen von Wasser aus den beiden Wasserleitungen 7 in den Mischraum 13 des Ventilteils 5 freigibt, zum anderen durch diese Bewegung die Einlassöffnung 8 zur Zufuhr von Umgebungsluft zur Belüftung des Wasserstrahls innerhalb des Ventilteils 5 durch Bewegung des Abschnitts 14 des Ventilelements 12 freigegeben ist. Das feste Ventilelement 11 ist eine scheibenförmige Platte im wesentlichen runden Querschnitts die von einem im wesentlichen zylindrischen Aufnahmeraum 21 der Auslaufarmatur 2 aufgenommen ist. Mit kleinerem Durchmesser als das Ventilelement 11 ist auch das bewegliche Ventilelement 12 mit im wesentlichen kreisförmigem Umfang ausgebildet, hat jedoch im Querschnitt in etwa die Form eines Ringes, wobei durch die Ringöffnung des Ventilelements 12 zusammen mit der diese nach oben hin abschließenden Schieberplatte 19 der Mischraum 13 des Ventilteils 5 gebildet ist. Der dem festen Ventilelement 11 zugewandte Öffnungsrand des beweglichen Ventilelements 12 weist dabei einen gegenüber dem der Handhabe 15 zugewandten Öffnungsrand verengten Querschnitt auf, so dass die von dem ersten erwähnten Öffnungsrand in Schließstellung (vgl. Fig.1, 3, 5, 7) zu übergreifenden Öffnungen durch den Rand gut überdeckt sind.

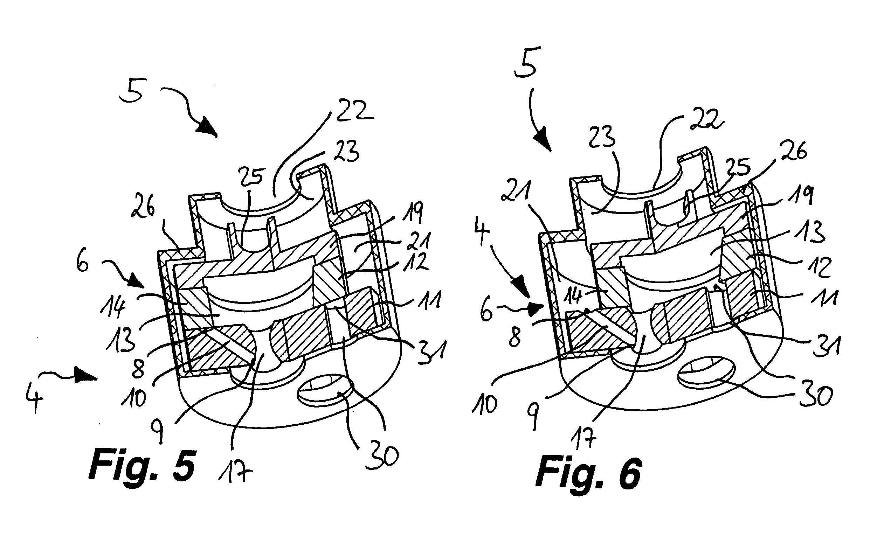

Wie bereits den vorhergehenden Figuren 1 bis 4 indirekt zu entnehmen war, in der Darstellung der Fig. 5 und 6, die wiederum die Schließ- (Fig.5) und die Offenstellung (Fig.6) der Auslaufeinheit zeigen, noch klarer wird, weist das als Kartusche ausgebildete Ventilteil 5 von unten über zwei Wasserleitungen 7 zugeführten Zuläufe 30 von Wasser auf. Es handelt sich dabei um zwei Zuläufe 30 von Wasser unterschiedlicher Temperatur in den beiden Leitungen 7, welches in dem Mischraum 13 zu seiner Auslauftemperatur gemischt wird. Tatsächlich wird das zugeführte Wasser bei der gewählten Kartuschenform durch einen ebenfalls nach unten weisenden Ablauf 20 des Wasserstrahls in Richtung auf den Wasserauslauf hin abgeführt, wobei der Wasserstrahl das Ventilteil 5 über einen in den Fig.1 und 3 dargestellten, abströmseitig des Ablaufs 20 angeordneten radialen Durchtrittsabschnitt verlässt. In der Schließstellung der Fig.5 übergreifen parallel zu dem Ventilelement 11 verlaufende Randbereiche des Ventilelements 12 sowohl die Wasserzulauföffnungen 31 zu dem Mischraum 13 als auch die Einlassöffnung 8 der Belüftungseinrichtung 4. Durch die Bewegung des beweglichen Ventilelements 12 aus der Schließ- in die Offenstellung der Fig.6 werden diese Öffnungen 31, 8 zum Zutritt von Wasser in den Mischraum 13 und Luft in den Belüftungskanal 10 des Ventilteils 5 freigegeben. Das Ventilelement 12 bewegt sich dabei im wesentlichen parallel zu dem festen Ventilelement 11 und zu Randbereichen eines flanschartigen Absatzes 26 des Ventilteils 5, der den Querschnitt des letzteren nach oben hin absatzartig verjüngt. Durch eine Öffnung 22 des verjüngten Zylinderquerschnitts 23 greift das nicht dargestellte Stellorgan 16 mit einem an seinem Ende angeordneten, ebenfalls nicht dargestellten Kugelgelenk 24 in einen an der dem Mischraum 13 abgewandten Flachseite der Schieberplatte 19 angeordnete Aufnahme 25, weswegen durch eine Bewegung der Handhabe 15 das bewegliche Ventilelement 12 durch Vermittlung der Schieberplatte 19 bewegbar ist. Wie bereits einmal erwähnt tritt in den Fig.1 bis 6 das Wasser aus dem Mischraum 13 durch eine als Querschnittsverengung ausgebildete Zumischeinrichtung 17, bevor es in den Ablauf 20 gelangt. Durch die Querschnittsverengung wir das Wasser beschleunigt, so dass durch den entstehenden Unterdruck Luft durch den Kanal 10 angesaugt wird und anschließend mit dem Wasser vermischt wird.

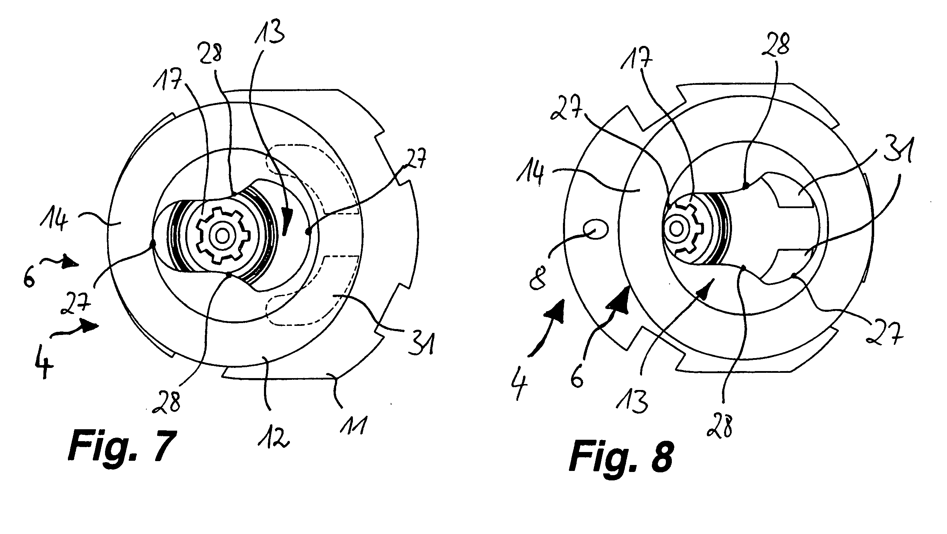

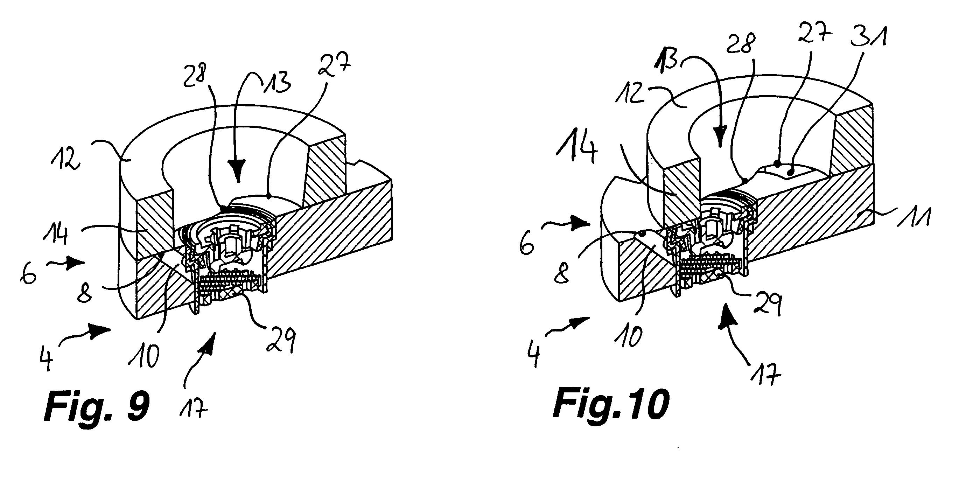

Das Ausführungsbeispiel der Fig. 7 und 8 weist von dem Mischraum 13 aus gesehen in Richtung abströmseitig auf den nicht dargestellten Ablauf 20 hin eine als Strahlregler ausgebildete Zumischeinrichtung 17 auf deren dem Betrachter abgewandten, nicht sichtbare Seite gemeinsam mit der ebenfalls nicht dargestellten Auslassöffnung 9 der Belüftungseinrichtung 4, von welcher nur die Einlassöffnung 8 in der Fig.8 erkennbar ist in den Ablauf 20 mündet. Ebenfalls den Fig. 7 und 8, aber auch den Fig.9 und 10 ist zu entnehmen, dass der dem Betrachter zugewandte Öffnungsrand des beweglichen Ventilelements 12 durchaus eine ringförmige Öffnung bildet, während die an dem gegenüberliegenden, dem festen Ventilelement zugewandten Öffnungsrand befindliche Querschnittsverengung die Wasserzutrittsöffnungen überdeckt. Die Querschnittsverengung des betreffenden Öffnungsrandes ist dabei durch zwei in etwa halbkreisförmige konvex gekrümmte Randbereiche 27 gebildet, die die in Bewegungsrichtung liegenden, ebenen Öffnungsgrenzen bilden und die durch zwei zwischen ihnen angeordnete konkave Randbereiche 28 verbunden sind.

Besser als den Fig.7 und 8 ist den Fig.9 und 10 zu entnehmen, dass die Zumischeinrichtung in diesem Ausführungsbeispiel als Strahlregler mit einem wabenförmigen, die Durchmischung begünstigenden Gitter 29 ausgebildet ist, und dass durch die Zumischeinrichtung 17 tretende Wasser durch den in Offenstellung (Fig.10) freigegeben Belüftungskanal 10 der Belüftungseinrichtung 4 in dem Ventilteil 5 der sanitären Auslaufeinheit belüftet werden kann.

Die vorstehend beschriebene Erfindung betrifft demnach eine sanitäre Auslaufeinheit 1 mit einer wenigstens einen Wasserauslauf 3 aufweisenden Auslaufarmatur 2 und mit zumindest einer zur Belüftung des Wasserstrahls vorgesehenen Belüftungseinrichtung 4, die in Strömungsrichtung beabstandet vor dem wenigstens einen Wasserauslauf 3 angeordnet ist, und mit zumindest einem Ventilteil 5, welches den Zustrom aus wenigstens einer Wasserleitung 7 zu dem Wasserauslauf 3 reguliert. Um eine sanitäre Auslaufeinheit 1 zur Verfügung zu haben, die eine zuverlässige Belüftung des Wasserstrahls bei hoher Dichtigkeit gegen rücklaufendes Wasser gewährleistet und sich ohne größere konstruktive Änderungen in bestehende Armaturen integrieren lässt, ist die Belüftungseinrichtung 4 in dem zumindest einen Ventilteil 5 aufgenommen und die Belüftungseinrichtung 4 ist mit wenigstens einem Stellglied 6 versehen, dessen Bewegung zwischen wenigstens einer Schließ- und wenigstens einer Offenstellung die Zufuhr von Umgebungsluft zu dem Wasserstrahl im Innern des Ventilteils 5 ändert. Bei größtmöglicher Gestaltungsfreiheit für Neugestaltungen der Armaturform kann durch die erfindungsgemäße Auslaufeinheit 1 aber auch auf bereits in hoher Zahl vorhandene Gestaltungen zurückgegriffen werden, ohne dass diese gestalterischen Änderungen unterliegen müssten.

## Patentansprüche

1. Sanitäre Auslaufeinheit mit einer, wenigstens einen Wasserauslauf aufweisenden Auslaufarmatur und mit zumindest einer zur Belüftung des Wasserstrahls vorgesehenen Belüftungseinrichtung (4), die in Strömungsrichtung beabstandet vor dem wenigstens einen Wasserauslauf angeordnet ist, und mit zumindest einem Ventilteil (5), welches den Zustrom aus wenigstens einer Wasserleitung zu dem Wasserauslauf reguliert, **dadurch gekennzeichnet, dass** die Belüftungseinrichtung (4) in dem zumindest einen Ventilteil (5) aufgenommen ist, dass die Belüftungseinrichtung (4) einen Belüftungskanal (10) aufweist, der derart in dem zumindest einen Ventilteil (5) aufgenommen ist, dass der Belüftungskanal (10) zwischen einer mit der Umgebungsluft kontaktierten Einlassöffnung (8) und einer zuströmseitig vor einem Ablauf (20) des Ventilteils (5) mündenden Auslassöffnung (9) verläuft, dass die Belüftungseinrichtung (4) mit wenigstens einem Stellglied (6) versehen ist, dessen Bewegung zwischen wenigstens einer Schließ- und mindestens einer Offenstellung die Zufuhr von Umgebungsluft zu dem Wasserstrahl im Inneren des Ventilteils (5) ändert, und dass das Stellglied (6) in seiner Schließstellung die Einlassöffnung (8) der Belüftungseinrichtung (4) übergreift und abdichtet.

2. Auslaufeinheit nach Anspruch 1, **dadurch gekennzeichnet, dass** das Ventilteil (5) als in der Auslaufarmatur (2) angeordnete Kartusche ausgebildet ist.

3. Auslaufeinheit nach Anspruch 1 oder 2, **dadurch gekennzeichnet, dass** das Ventilteil (5) wenigstens zwei gegeneinander bewegliche Ventilelemente (11, 12), insbesondere ein ortsfestes Ventilelement (11) und ein gegenüber diesem ortsfesten Ventilelement (11) bewegliches Ventilelement (12) aufweist, und dass wenigstens eines der Ventilelemente (12) zwischen einer Schließ- und einer Offenstellung bewegbar ist.

4. Auslaufeinheit nach Anspruch 3, **dadurch gekennzeichnet, dass** die Ventilelemente (11, 12) als scheibenartige Dichtelemente, insbesondere aus einem Keramikmaterial und/oder einem Kunststoffmaterial ausgebildet vorgesehen sind.

5. Auslaufeinheit nach Anspruch 3 oder 4, **dadurch gekennzeichnet, dass** die Position der Ventilelemente (11, 12) zueinander den Zutritt von Wasser aus mehr als einer Wasserleitung (7) zu einem gemeinsamen Mischraum (13) reguliert, welche Leitungen (7) insbesondere Wasser unterschiedlicher Temperatur transportieren.

6. Auslaufeinheit nach einem der vorhergehenden Ansprüche, **dadurch gekennzeichnet, dass** die Einlassöffnung (8) der Belüftungseinrichtung (4) durch ein mit dem beweglichen Ventilelement (12) zusammenwirkendes Dichtelement verschließ- und abdichtbar ist.

7. Auslaufeinheit nach einem der Ansprüche 3 bis 6, **dadurch gekennzeichnet, dass** ein Abschnitt (14) des beweglichen Ventilelements (12) des Ventilteils (5) das der Belüftungseinrichtung (4) zugeordnete Stellglied (6) bildet.

8. Auslaufeinheit nach einem der vorhergehenden Ansprüche, **dadurch gekennzeichnet, dass** eine Handhabe (15) der Auslaufeinheit (1) über ein Stellorgan (16) mit dem beweglichen Ventilelement (12) verbunden ist und eine Betätigung der Handhabe (15) eine im wesentlichen quer zur Betätigungsrichtung verlaufende Bewegung des Ventilelements (12) auslöst.

9. Auslaufeinheit nach einem der vorhergehenden Ansprüche, **dadurch gekennzeichnet, dass** an der Belüftungseinrichtung (4) wenigstens ein weiteres, von dem ersten Stellglied (6) unabhängiges zweites Stellglied zur Änderung der Luftzufuhr vorgesehen ist.

10. Auslaufeinheit nach einem der vorhergehenden Ansprüche, **dadurch gekennzeichnet, dass** an dem Ventilteil (5) im Bereich der Auslassöffnung (9) der Belüftungseinrichtung (4) stromaufwärts eine Zumischeinrichtung (17) vorgesehen ist.

11. Auslaufeinheit nach Anspruch 10, **dadurch gekennzeichnet, dass** die Zumischeinrichtung (17) als Strahlzerleger, Düse oder dergleichen Querschnittsverengung einen Bestandteil des Ventilteils (5) bildet.

12. Auslaufeinheit nach Anspruch 10, **dadurch gekennzeichnet, dass** die Zumischeinrichtung (17) als in einen Bereich des Ventilteils (5) einbringbares, separates Einsetzteil, insbesondere als Strahlregler vorgesehen ist.

13. Auslaufeinheit nach einem der vorhergehenden Ansprüche, **dadurch gekennzeichnet, dass** die Belüftungseinrichtung (4) mit einem Rückhaltemittel versehen ist, das bei Offenstellung der Belüftungseinrichtung (4) ein Zurückströmen des Wassers durch diese verhindert.

14. Auslaufeinheit nach Anspruch 12, **dadurch gekennzeichnet, dass** das Rückhaltemittel als Rückschlagventil vorgesehen ist.

15. Auslaufeinheit nach einem der vorhergehenden Ansprüche, **dadurch gekennzeichnet, dass** an dem Wasserauslauf (3) eine Aufnahme (18) zur Anordnung eines Strahlreglers, Strahlrichtungsgebers oder dergleichen Strahlformers vorgesehen ist.

## Claims

1. Sanitary outlet unit comprising an outlet fitting which has at least one water outlet and comprising at least one aeration device (4) which is provided for aerating the water jet and is arranged upstream of the at least one water outlet at a distance therefrom in the direction of flow, and comprising at least one valve part (5) which regulates the inflow from at least one water line to the water outlet, **characterized in that** the aeration device (4) is received in the at least one valve part (5), **in that** the aeration device (4) has an aeration channel (10), which is received in the at least one valve part (5) in such a manner that the aeration channel (10) runs between an intake opening (8) which is contacted by the ambient air and a discharge opening (9) which issues out upstream of a drain (20) of the valve part (5) on the inflow side, **in that** the aeration device (4) is provided with at least one actuator (6), the movement of which between at least one closed position and at least one open position changes the admission of ambient air to the water jet inside the valve part (5), and **in that** the actuator (6), in the closed position thereof, overlaps and seals off the intake opening (8) of the aeration device (4).

2. Outlet unit according to Claim 1, **characterized in that** the valve part (5) is in the form of a cartridge arranged in the outlet fitting (2).

3. Outlet unit according to Claim 1 or 2, **characterized in that** the valve part (5) has at least two valve elements (11, 12) which are movable with respect to one another, in particular a stationary valve element (11) and a valve element (12) which is movable in relation to said stationary valve element (11), and **in that** at least one of the valve elements (12) can move between a closed position and an open position.

4. Outlet unit according to Claim 3, **characterized in that** the valve elements (11, 12) are provided as disk-like sealing elements, in particular formed from a ceramic material and/or a plastic material.

5. Outlet unit according to Claim 3 or 4, **characterized in that** the position of the valve elements (11, 12) in relation to one another regulates the admission of water from more than one water line (7) to a common mixing space (13), which lines (7) in particular transport water at differing temperature.

6. Outlet unit according to one of the preceding claims, **characterized in that** the intake opening (8) of the aeration device (4) can be closed and sealed off by a sealing element which interacts with the movable valve element (12).

7. Outlet unit according to one of Claims 3 to 6, **characterized in that** a portion (14) of the movable valve element (12) of the valve part (5) forms the actuator (6) assigned to the aeration device (4).

8. Outlet unit according to one of the preceding claims, **characterized in that** a lever (15) of the outlet unit (1) is connected to the movable valve element (12) via a final control element (16), and actuation of the lever (15) triggers a movement of the valve element (12) which runs substantially transversely in relation to the actuation direction.

9. Outlet unit according to one of the preceding claims, **characterized in that** at least one further, second actuator, which is independent of the first actuator (6), is provided on the aeration device (4) for changing the admission of air.

10. Outlet unit according to one of the preceding claims, **characterized in that** a mixing device (17) is provided on the valve part (5) upstream in the region of the discharge opening (9) of the aeration device (4).

11. Outlet unit according to Claim 10, **characterized in that** the mixing device (17), as a jet splitter, nozzle or similar cross section constriction, forms a component part of the valve part (5).

12. Outlet unit according to Claim 10, **characterized in that** the mixing device (17) is provided as a separate insertion part which can be introduced into a region of the valve part (5), in particular as a jet regulator.

13. Outlet unit according to one of the preceding claims, **characterized in that** the aeration device (4) is provided with a retaining means which, when the aeration device (4) is in the open position, prevents the water from flowing back through the latter.

14. Outlet unit according to Claim 12, **characterized in that** the retaining means is provided as a non-return valve.

15. Outlet unit according to one of the preceding claims, **characterized in that** a receptacle (18) for the arrangement of a jet regulator, jet director or similar jet former is provided on the water outlet (3).

## Revendications

1. Ensemble sanitaire de distribution comprenant une robinetterie de distribution munie d'au moins une sortie d'eau ; au moins un dispositif d'aération (4) qui est prévu pour aérer le jet d'eau et est situé à distance avant la sortie d'eau à présence minimale, dans la direction de l'écoulement ; et au moins une partie (5) formant vanne qui régule le flux d'arrivée émanant d'au moins une conduite d'eau et gagnant ladite sortie d'eau, **caractérisé par le fait que** le dispositif d'aération (4) est logé dans la partie (5) formant vanne, à présence minimale ; que ledit dispositif d'aération (4) comporte un canal d'aération (10) intégré dans ladite partie (5) formant vanne, à présence minimale, de façon telle que ledit canal d'aération (10) s'étende entre un orifice d'admission (8) en contact avec l'air environnant et un orifice de décharge (9) débouchant, côté afflux, devant une zone de décharge (20) de ladite partie (5) formant vanne ; que ledit dispositif d'aération (4) est pourvu d'au moins un organe de réglage (6) dont le mouvement, entre au moins une position de fermeture et au moins une position d'ouverture, fait varier la délivrance d'air environnant au jet d'eau, dans l'espace intérieur de ladite partie (5) formant vanne ; et que, dans sa position de fermeture, ledit organe de réglage (6) coiffe et obture hermétiquement l'orifice d'admission (8) dudit dispositif d'aération (4).

2. Ensemble de distribution selon la revendication 1, **caractérisé par le fait que** la partie (5) formant vanne est réalisée en tant que cartouche logée dans la robinetterie de distribution (2).

3. Ensemble de distribution selon la revendication 1 ou 2, **caractérisé par le fait que** la partie (5) formant vanne comprend au moins deux éléments obturateurs (11, 12) mobiles l'un vis-à-vis de l'autre, en particulier un élément obturateur (11) fixe et un élément obturateur (12) mobile par rapport à cet élément obturateur fixe (11) ; et qu'au moins l'un (12) desdits éléments obturateurs peut être mû entre une position de fermeture et une position d'ouverture.

4. Ensemble de distribution selon la revendication 3, **caractérisé par le fait que** les éléments obturateurs (11, 12) sont prévus sous la forme d'éléments discoïdaux d'étanchement, notamment en un matériau céramique et/ou en une matière plastique.

5. Ensemble de distribution selon la revendication 3 ou 4, **caractérisé par le fait que** les emplacements mutuels des éléments obturateurs (11, 12) régulent l'arrivée d'eau émanant de plus d'une conduite d'eau (7) et gagnant une chambre commune de mélange (13), lesquelles conduites (7) charrient notamment de l'eau présentant des températures différentes.

6. Ensemble de distribution selon l'une des revendications précédentes, **caractérisé par le fait que** l'orifice d'admission (8) du dispositif d'aération (4) peut être occulté, et obturé hermétiquement, par un élément d'étanchement coopérant avec l'élément obturateur mobile (12).

7. Ensemble de distribution selon l'une des revendications 3 à 6, **caractérisé par le fait qu'**une région (14) de l'élément obturateur mobile (12) de la partie (5) formant vanne matérialise l'organe de réglage (6) affecté au dispositif d'aération (4).

8. Ensemble de distribution selon l'une des revendications précédentes, **caractérisé par le fait qu'**une manette (15) dudit ensemble de distribution (1) est reliée à l'élément obturateur mobile (12) par l'intermédiaire d'un organe de manoeuvre (16), et un actionnement de ladite manette (15) déclenche un mouvement dudit élément obturateur (12) s'opérant, pour l'essentiel, transversalement par rapport à la direction dudit actionnement.

9. Ensemble de distribution selon l'une des revendications précédentes, **caractérisé par le fait qu'**au moins un autre organe, ou second organe de réglage indépendant du premier organe de réglage (6) est prévu, sur le dispositif d'aération (4), afin de faire varier l'amenée d'air.

10. Ensemble de distribution selon l'une des revendications précédentes, **caractérisé par le fait qu'**un dispositif (17) de mélange additionnel est prévu en amont, sur la partie (5) formant vanne, dans la région de l'orifice de décharge (9) du dispositif d'aération (4).

11. Ensemble de distribution selon la revendication 10, **caractérisé par le fait que** le dispositif (17) de mélange additionnel, se présentant comme un brise-jets, une buse ou un rétrécissement similaire de section transversale, matérialise un élément constitutif de la partie (5) formant vanne.

12. Ensemble de distribution selon la revendication 10, **caractérisé par le fait que** le dispositif (17) de mélange additionnel est prévu sous la forme d'une pièce intégrée distincte, notamment d'un régulateur de jets, pouvant être inséré(e) dans une région de la partie (5) formant vanne.

13. Ensemble de distribution selon l'une des revendications précédentes, **caractérisé par le fait que** le dispositif d'aération (4) est doté d'un moyen de retenue empêchant, en position d'ouverture dudit dispositif d'aération (4), un reflux de l'eau par ledit dispositif.

14. Ensemble de distribution selon la revendication 12, **caractérisé par le fait que** le moyen de retenue se présente comme un clapet antiretour.

15. Ensemble de distribution selon l'une des revendications précédentes, **caractérisé par le fait qu'**un logement (18) est prévu, sur la sortie d'eau (3), pour l'installation d'un régulateur de jets, d'un guide directionnel de jets, ou d'un formateur de jets similaire.
